# EUROPEAN PATENT APPLICATION

(11) **EP 4 094 646 A1**
(43) Date of publication of application: **30.11.2022**
(21) Application number: 22175589.5
(22) Date of filing: 25.05.2022
(51) Int. Cl.: A47J 41/02, B65D 47/08, A47J 41/00

(54) **CAP UNIT AND CONTAINER HAVING CAP**

(30) Priority: 25.05.2021 JP 2021087789
(71) Applicant: Thermos K.K., Tsubame-shi Niigata (JP); Thermos L.L.C., Schaumburg, IL 60173 (US)
(72) Inventor: KIKUCHI, Shogo, Tsubame-shi Niigata-ken (JP); MURATA, Takeshi, Tsubame-shi Niigata-ken (JP)
(74) Representative: Barker Brettell LLP

(57) **Abstract**

[Summary]

[Problem] To provide a cap unit comprising a lid locking mechanism having high functionality and excellent design properties.

[Solution] A cap unit comprises a lid locking mechanism 36 for fixing a lid element 9 in a position for closing a liquid passage port 13 while resisting biasing of a first biasing member 26, the lid locking mechanism 36 comprising: a locking member 38 which is pivotably attached to a cap main body 7 by way of a second hinge portion 37, and is pivoted between a locking position, in which one latching portion 44 provided on one end side thereof is latched to another latching portion 45 provided on the lid element 9 side, and a locking release position, in which the latched state of said one latching portion 44 and said other latching portion 45 is released; and a cover member 49 for covering the locking member 38.

## Description

### [Technical Field]

The present invention relates to a cap unit and to a container having a cap.

### [Background Art]

Cap units (stoppers) which are detachably fitted to a container main body having an open upper portion are known from the prior art (e.g., see Patent Document 1).

Such a cap unit comprises: a cap main body which closes an upper opening portion of the container main body while also being provided with a liquid passage port communicating with the inside of the container main body; and a lid element for opening/closing the liquid passage port while being pivotably attached to the cap main body by way of a first hinge portion. Furthermore, the cap unit biases the lid element in a direction for opening the liquid passage port by means of a first biasing member provided on the first hinge portion, while also comprising a lid locking mechanism for fixing the lid element in a position for closing the liquid passage port while resisting the biasing of the first biasing member.

The lid locking mechanism has a locking member pivotably attached to the lid element by way of a second hinge portion. The locking member is pivoted between a locking position, in which one latching portion provided on one end side thereof is latched to another latching portion provided on the cap main body side, and a locking release position, in which the latched state of said one latching portion and said other latching portion is released. Furthermore, the lid locking mechanism has a second biasing member for biasing the locking member towards the locking position side in a pivoting direction.

The locking member of the lid locking mechanism is subjected to a pressing operation while resisting the biasing of the second biasing member, which releases fixing (the locked state) of the lid element, thereby enabling the lid element to pivot in the opening direction by means of the biasing of the first biasing member.

In a container having a cap which is provided with such a cap unit, the liquid passage port is set in an open state by releasing the locked state of the lid element afforded by the lid locking mechanism, and allowing the lid element to pivot in the opening direction. As a result, a beverage inside the container main body can be drunk through the liquid passage port.

### [Prior Art Documents]

### [Patent Documents]

[Patent Document 1] JP 2010-23854 A

### [Summary of the Invention]

### [Problems to be Solved by the Invention]

It is difficult to differentiate a product from products of other companies with a container having a cap which is provided with this conventional cap unit, and there is a need for further measures to expand market share, which can be achieved by differentiating products.

For example, with the conventional cap unit, there is a need to provide a lid locking mechanism having high functionality and excellent design properties. In the case of the conventional lid locking mechanism in particular, the locking member is made of a resin, so it is difficult to achieve a balance between durability and design properties of the locking member.

The present invention has been proposed in light of the situation in the prior art, and the objective thereof lies in providing a cap unit comprising a lid locking mechanism having high functionality and excellent design properties, and a container having a cap, which comprises such a cap unit.

### [Means for Solving the Problems]

In order to achieve the objective above, the present invention provides the following means.
[1] A cap unit which is detachably fitted to a container main body having an open upper portion, the cap unit comprising:
   a cap main body which closes an upper opening portion of the container main body while also being provided with a liquid passage port communicating with the inside of the container main body;
   a lid element for opening/closing the liquid passage port, which is pivotably attached to the cap main body by way of a first hinge portion, in a state of being biased in a direction for opening the liquid passage port by means of a first biasing member provided on the first hinge portion; and
   a lid locking mechanism for fixing the lid element in a position for closing the liquid passage port while resisting the biasing of the first biasing member,
   characterized in that the lid locking mechanism comprises:
      a locking member which is pivotably attached to the cap main body by way of a second hinge portion, and is pivoted between a locking position, in which one latching portion provided on one end side thereof is latched to another latching portion provided on the lid element side, and a locking release position, in which the latched state of said one latching portion and said other latching portion is released; and
      a cover member for covering the locking member.
[2] A cap unit as described in [1] above, characterized in that the cover member is pivotably attached by way of the second hinge portion.
[3] A cap unit as described in [1] above, characterized in that the cover member is attached to the locking member by way of a fixing mechanism.
[4] A cap unit as described in [2] or [3] above, characterized in that the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction.
[5] A cap unit as described in [4] above, characterized in that the cover member comprises: a cover main body for covering the locking member; and a pair of support arms which protrude from the cover main body so as to be positioned on both sides of the first hinge bearing portion lying therebetween, and which are provided with the shaft holes, the cover member being attached to the locking member as a single piece.
[6] A cap unit as described in [4] above, characterized in that the cover member comprises: a cover main body for covering the locking member; and a pair of support arms which protrude from the cover main body so as to be positioned on both sides of the second hinge bearing portion and the third hinge bearing portion lying therebetween, and which are provided with the shaft holes, the cover member being attached to the locking member as a single piece.
[7] A cap unit as described in [5] or [6] above, characterized in that the cover member comprises shaft holes allowing the hinge shaft to penetrate the pair of support arms in the pivot axis direction, the cover member being attached to the locking member as a single piece.
[8] A cap unit as described in [3] above, characterized in that the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction,
   the cover member comprises: a cover main body for covering the locking member; and a pair of support arms which protrude from the cover main body so as to be positioned on both sides of the first hinge bearing portion lying therebetween, and
   the fixing mechanism fixes the pair of support arms to the first hinge bearing portion.
[9] A cap unit as described in [3] above, characterized in that the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction,
   the cover member comprises: a cover main body for covering the locking member; and a pair of support arms which protrude from the cover main body so as to be positioned on both sides of the second hinge bearing portion and the third hinge bearing portion lying therebetween, and the fixing mechanism fixes the pair of support arms to the second hinge bearing portion and the third hinge bearing portion.
[10] A cap unit as described in any one of [1] to [9] above, characterized in that the cover member is made of a metal.
[11] A container having a cap, which comprises:
   a cap unit as described in any one of [1] to [10] above; and
   a container main body to which the cap unit is fitted.
[12] A container having a cap as described in [11] above, characterized in that the container main body has a vacuum-insulated structure.

### [Advantage of the Invention]

As described above, the present invention makes it possible to provide a cap unit comprising a lid locking mechanism having high functionality and excellent design properties, and a container having a cap, which comprises such a cap unit.

### [Brief Description of the Drawings]

[Fig. 1] is an oblique view showing an external view of a container having a cap, which comprises a cap unit according to an embodiment of the invention.
[Fig. 2] is a view in cross section showing the configuration of the container having a cap.
[Fig. 3] is an oblique view in cross section showing the configuration of the cap unit.
[Fig. 4] is a view in cross section showing a state in which a locking member is in a locking position when the cap unit is closed.
[Fig. 5] is a view in cross section showing a state in which the locking member is in a locking release position when the cap unit is closed.
[Fig. 6] is a view in cross section showing a state when the cap unit is open.
[Fig. 7] is an oblique view showing a state when the cap unit is open.
[Fig. 8] is an oblique view showing the configuration of a mouth-forming member.
[Fig. 9] shows the configuration of a latching member, where (a) is an oblique view seen from the front side thereof, and (b) is an oblique view seen from the rear side thereof.
[Fig. 10] is an exploded oblique view where a lid locking mechanism is seen from the front side.
[Fig. 11] is an exploded oblique view where the lid locking member is seen from the rear side.
[Fig. 12] is an exploded oblique view where the locking member and a second biasing member are seen from the front side.
[Fig. 13] is an exploded oblique view where the locking member and the second biasing member are seen from the rear side.
[Fig. 14] is an exploded oblique view showing the configuration of the locking member and a cover member.
[Fig. 15] is a main-part oblique view showing a state in which the cover member is attached to the locking member.
[Fig. 16] is an exploded oblique view showing a first variant example of the cover member attached to the locking member.
[Fig. 17] is an oblique view showing a second variant example of the cover member attached to the locking member.
[Fig. 18] is a side view showing a third variant example of the cover member attached to the locking member.
[Fig. 19] is an oblique view showing a first hinge bearing portion constituting a first hinge portion.
[Fig. 20] is an oblique view where first, second and third hinge bearing portions constituting the first hinge portion are seen from one side.
[Fig. 21] is an oblique view where the first, second and third hinge bearing portions constituting the first hinge portion are seen from another side.
[Fig. 22] is an oblique view showing a first biasing member, a hinge shaft and an opposing member constituting the first hinge portion.
[Fig. 23] is an oblique view in cross section showing the configuration of the first hinge portion.
[Fig. 24] is an oblique view where a pivoting damper mechanism is seen from one side.
[Fig. 25] is an oblique view where the pivoting damper mechanism is seen from another side.
[Fig. 26] is an exploded oblique view where the pivoting damper mechanism is seen from one side.
[Fig. 27] is an exploded oblique view where the pivoting damper mechanism is seen from another side.
[Fig. 28] is a view in cross section showing the configuration of the pivoting damper mechanism.
[Fig. 29] is an oblique view showing a different configuration of the pivoting damper mechanism.

### [Mode for Implementing the Invention]

An embodiment of the present invention will be described in detail below with reference to the drawings.

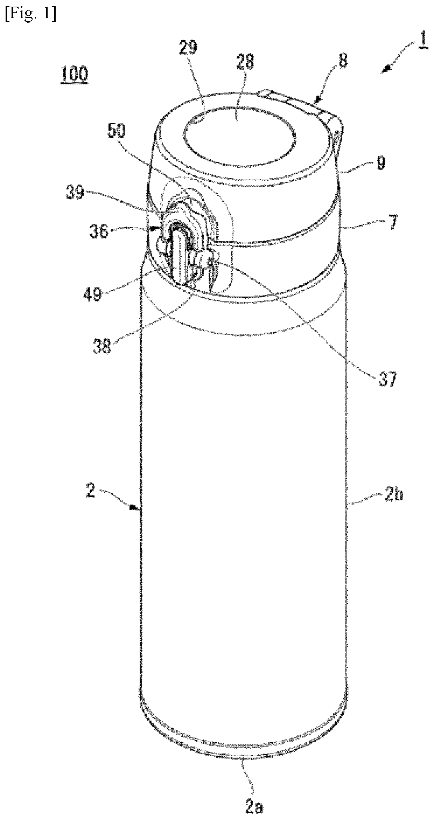

A container 100 having a cap, which comprises a cap unit 1 shown in fig. 1-28, will be described by way of example as an embodiment of the present invention.

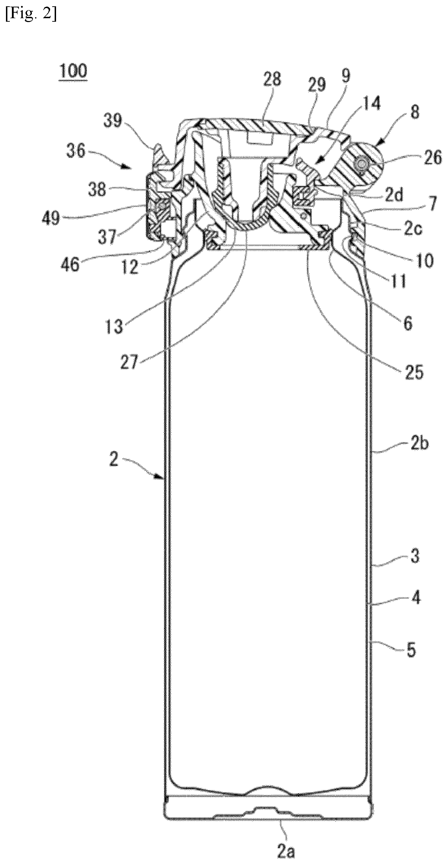

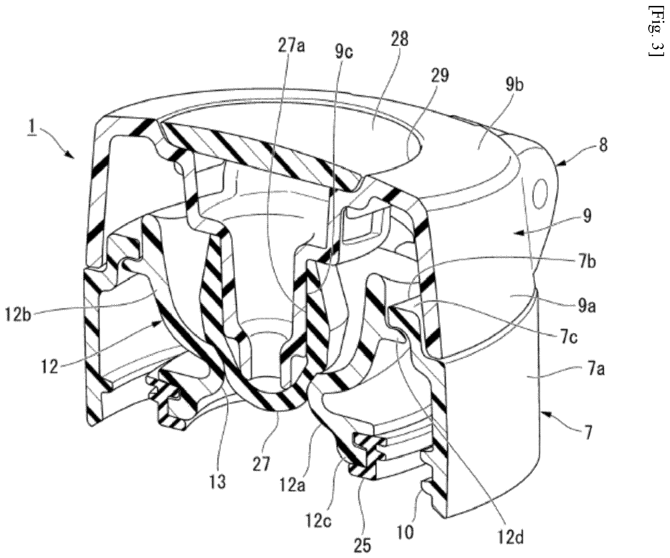

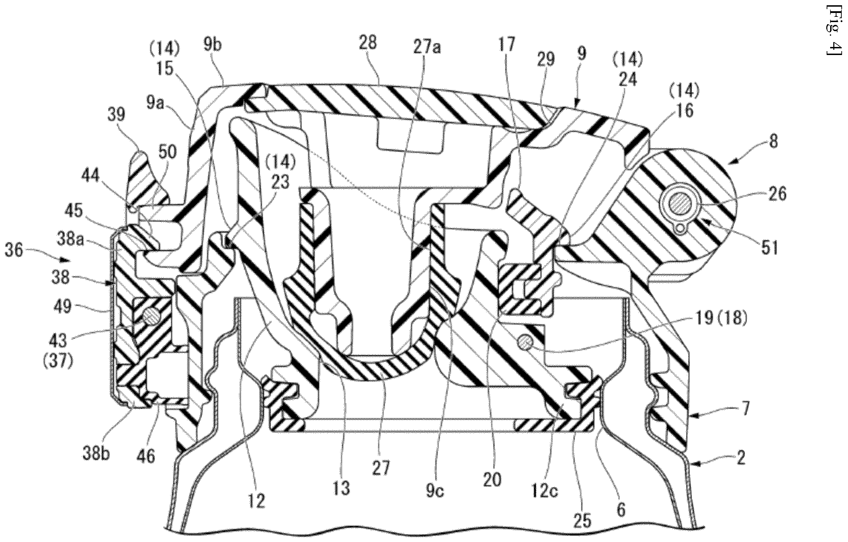

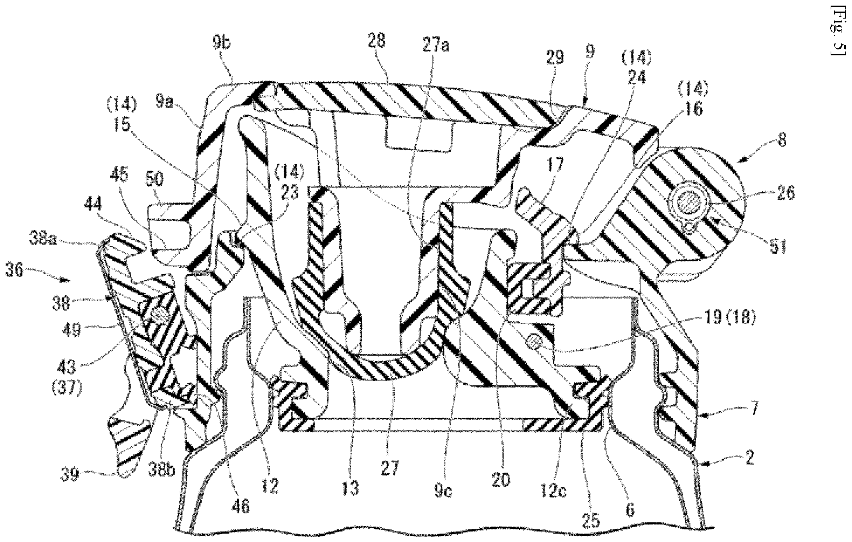

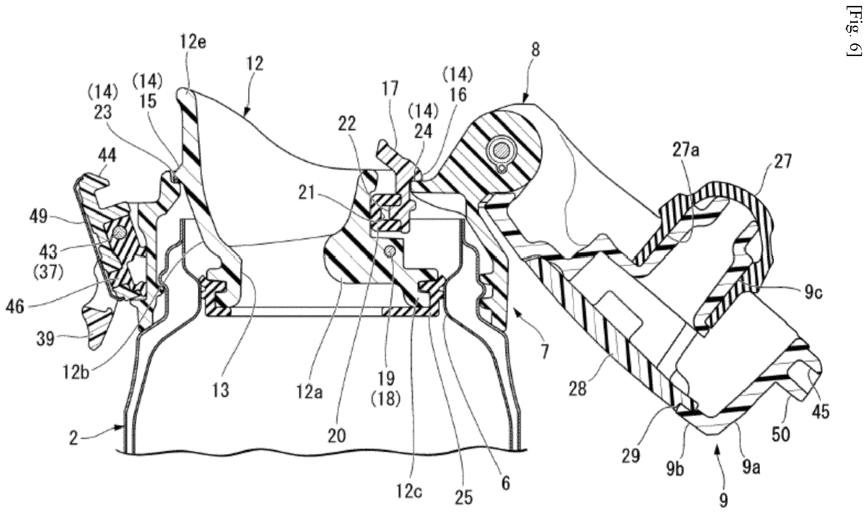

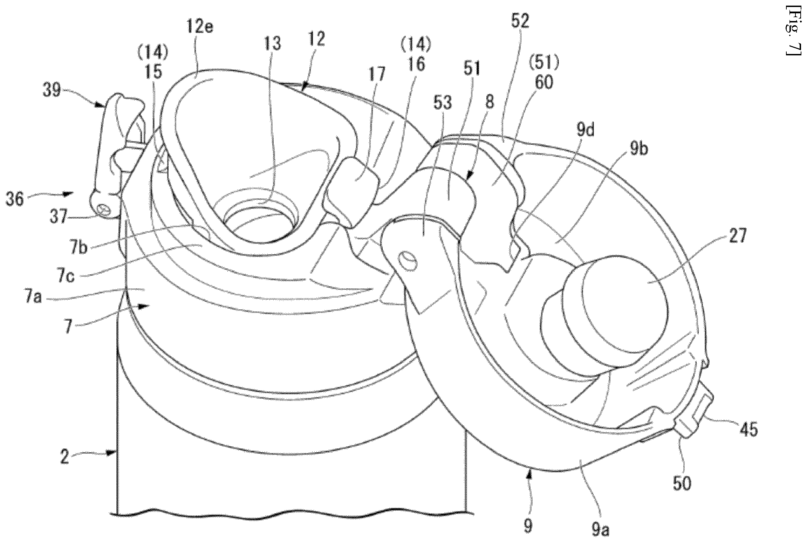

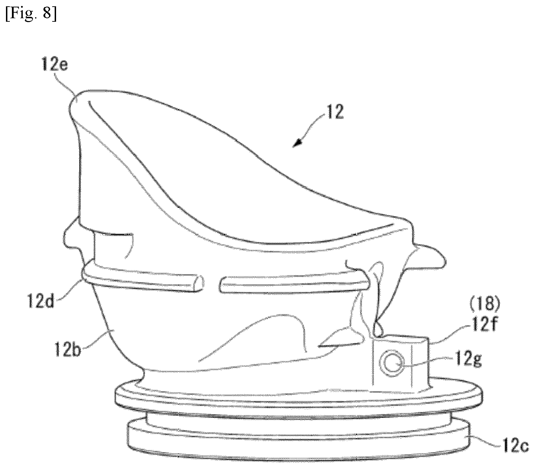

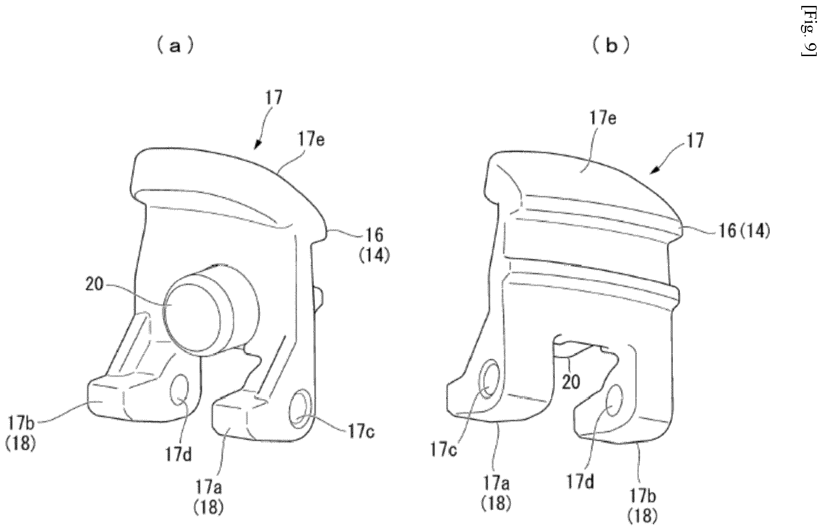

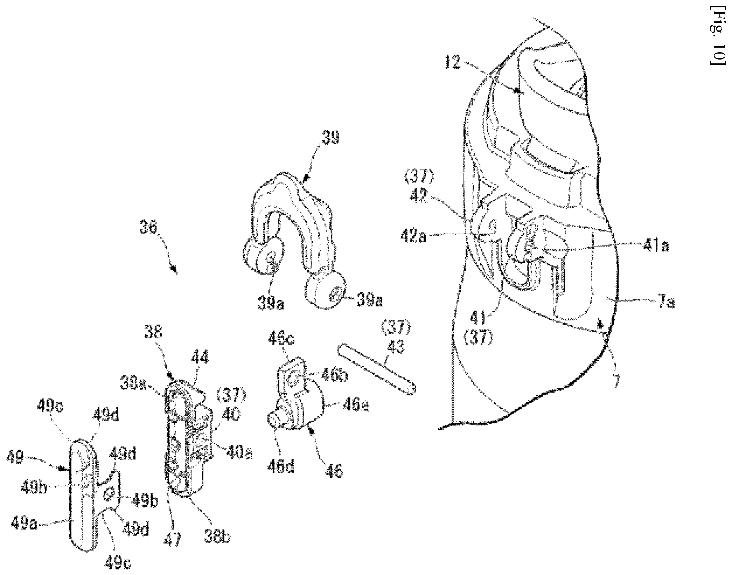

It should be noted that Fig. 1 is an oblique view showing an external view of the container 100 having a cap, which comprises the cap unit 1. Fig. 2 is a view in cross section showing the configuration of the container 100 having a cap. Fig. 3 is an oblique view in cross section showing the configuration of the cap unit 1. Fig. 4 is a view in cross section showing a state in which a locking member 38 is in a locking position when the cap unit 1 is closed. Fig. 5 is a view in cross section showing a state in which the locking member 38 is in a locking release position when the cap unit 1 is closed. Fig. 6 is a view in cross section showing a state when the cap unit 1 is open. Fig. 7 is an oblique view showing a state when the cap unit 1 is open. Fig. 8 is an oblique view showing the configuration of a mouth-forming member 12. Fig. 9 shows the configuration of a latching member 17, where (a) is an oblique view seen from the front side thereof, and (b) is an oblique view seen from the rear side thereof. Fig. 10 is an exploded oblique view where a lid locking mechanism 36 is seen from the front side.

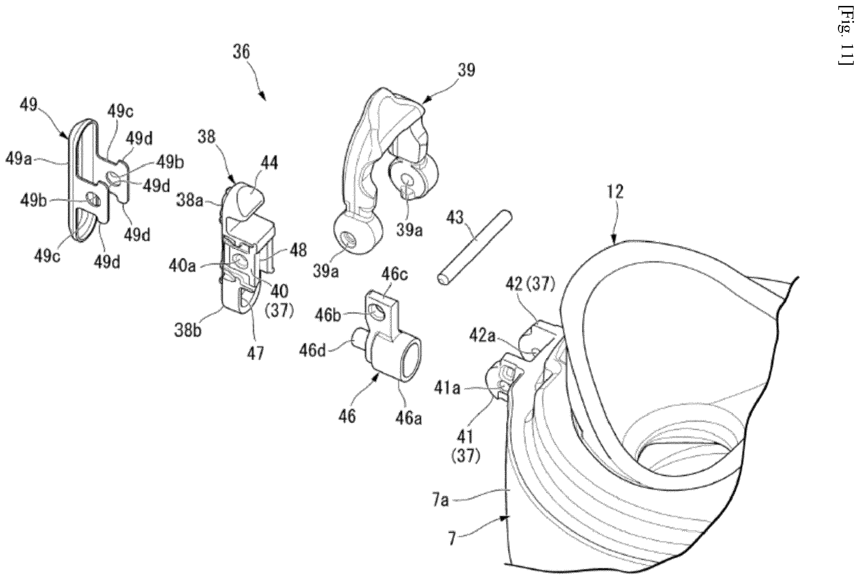

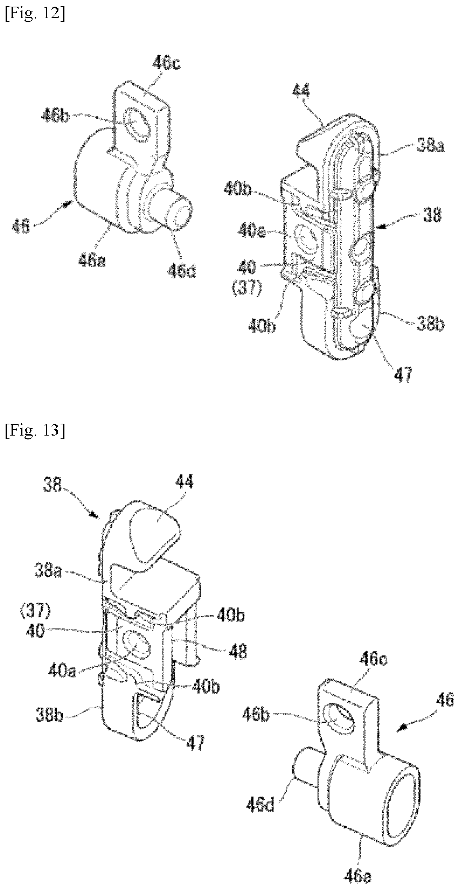

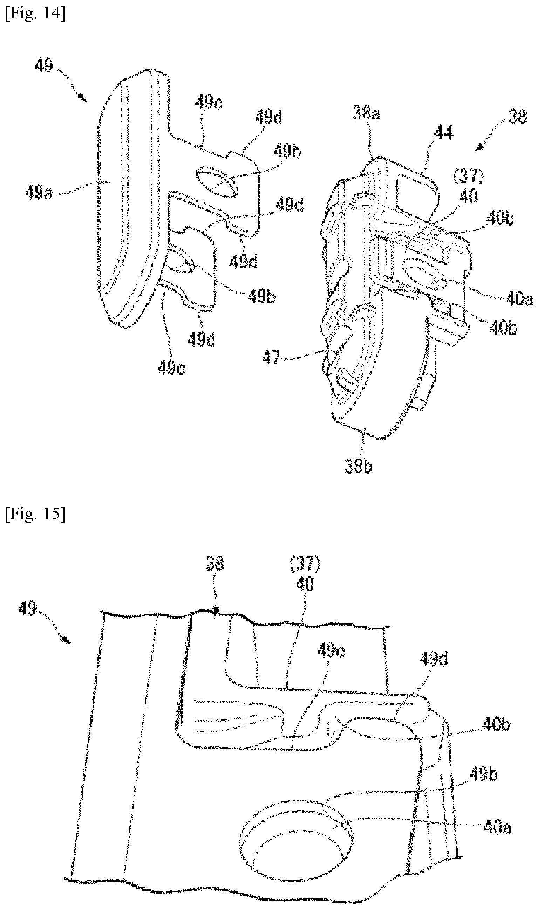

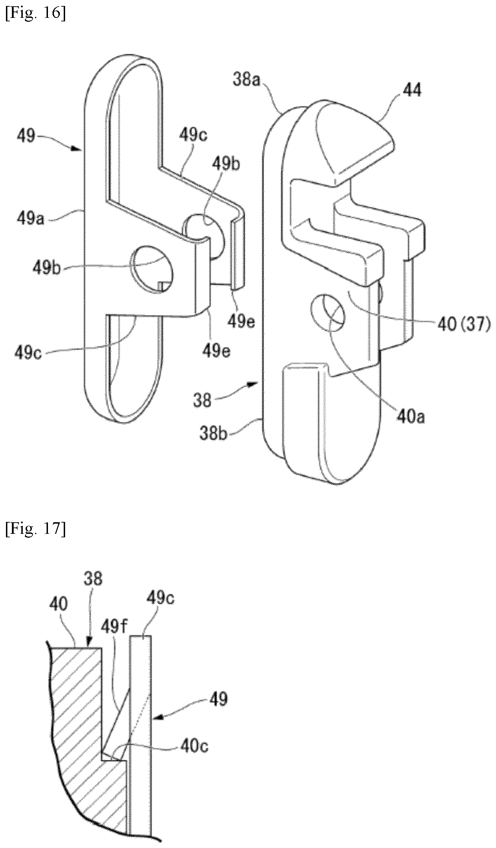

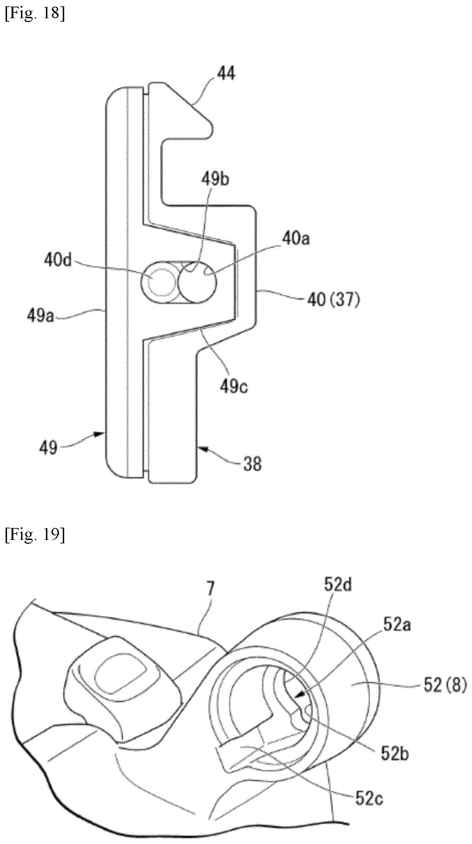

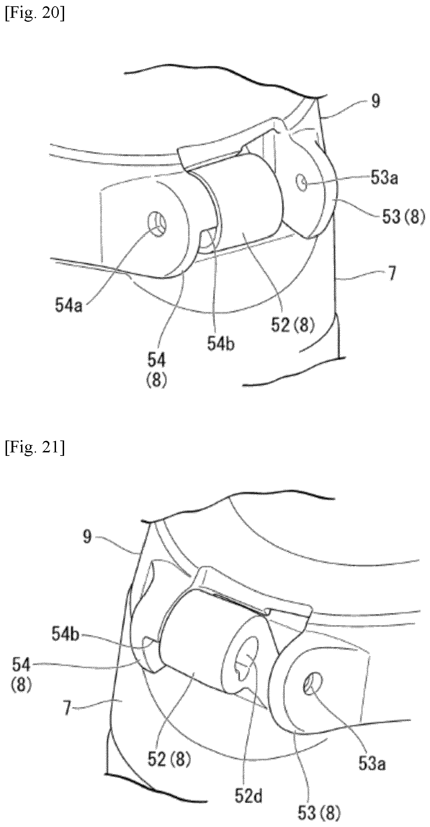

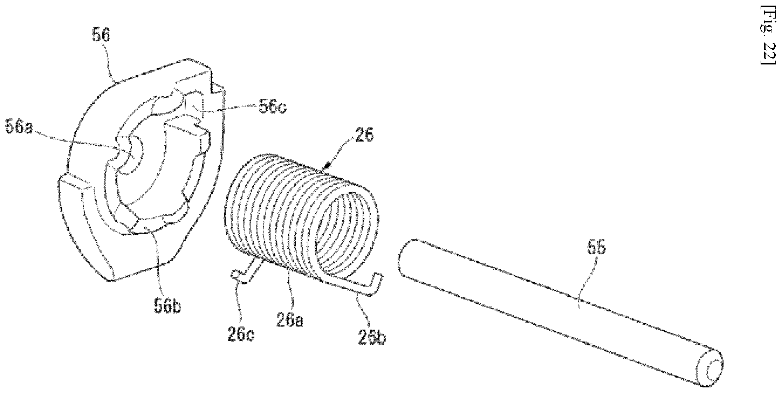

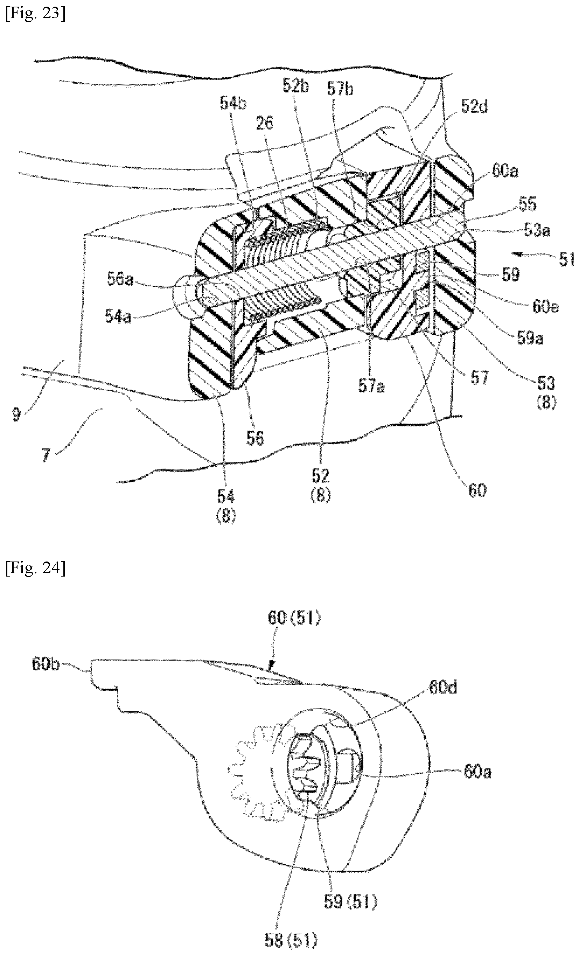

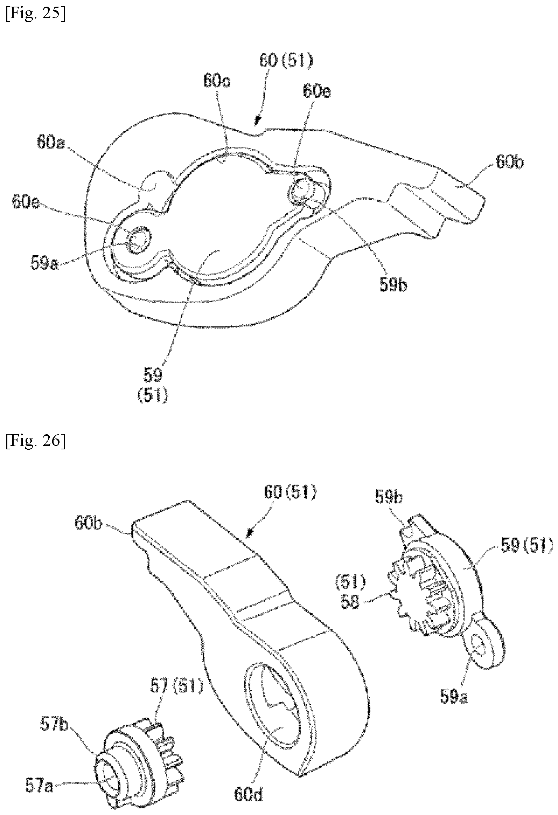

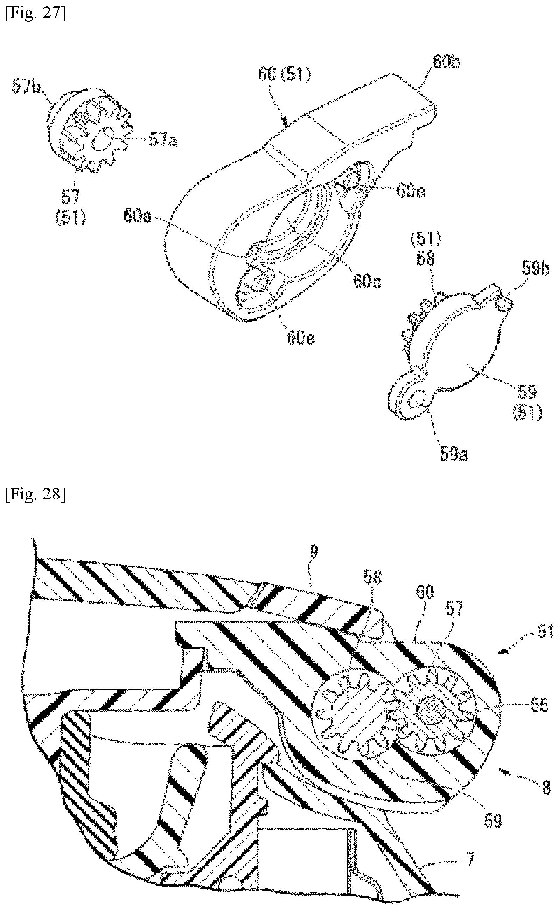

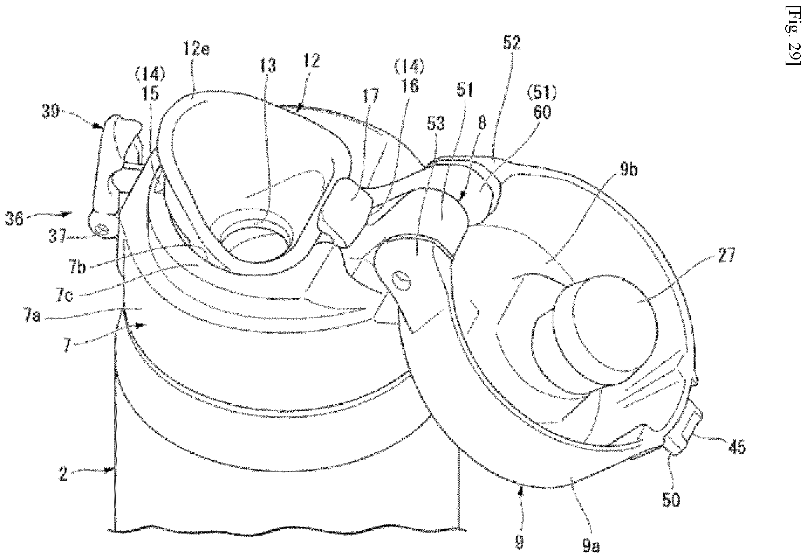

Fig. 11 is an exploded oblique view where the lid locking member 36 is seen from the rear side. Fig. 12 is an exploded oblique view where the locking member 38 and a second biasing member 46 are seen from the front side. Fig. 13 is an exploded oblique view where the locking member 38 and the second biasing member 46 are seen from the rear side. Fig. 14 is an exploded oblique view showing the configuration of the locking member 38 and a cover member 49. Fig. 15 is a main-part oblique view showing a state in which the cover member 49 is attached to the locking member 38. Fig. 16 is an exploded oblique view showing a first variant example of the cover member 49 attached to the locking member 38. Fig. 17 is an oblique view showing a second variant example of the cover member 49 attached to the locking member 38. Fig. 18 is a side view showing a third variant example of the cover member attached to the locking member. Fig. 19 is an oblique view showing a first hinge bearing portion 52 constituting a first hinge portion 8. Fig. 20 is an oblique view where first, second and third hinge bearing portions 52, 53, 54 constituting the first hinge portion 8 are seen from one side. Fig. 21 is an oblique view where the first, second and third hinge bearing portions 52, 53, 54 constituting the first hinge portion 8 are seen from another side. Fig. 22 is an oblique view showing a first biasing member 26, a hinge shaft 55 and an opposing member 56 constituting the first hinge portion 8. Fig. 23 is an oblique view in cross section showing the configuration of the first hinge portion 8. Fig. 24 is an oblique view where a pivoting damper mechanism 51 is seen from one side. Fig. 25 is an oblique view where the pivoting damper mechanism 51 is seen from another side. Fig. 26 is an exploded oblique view where the pivoting damper mechanism 51 is seen from one side. Fig. 27 is an exploded oblique view where the pivoting damper mechanism 51 is seen from another side. Fig. 28 is a view in cross section showing the configuration of the pivoting damper mechanism 51. Fig. 29 is an oblique view showing a different configuration of the pivoting damper mechanism 51.

As shown in fig. 1 and 2, the container 100 having a cap of this embodiment comprises: the cap unit 1 of this embodiment, and a container main body 2 to which the cap unit 1 is detachably fitted. The container 100 having a cap is a beverage container which, by virtue of the container main body 2 having a vacuum-insulated structure, is capable of keeping a beverage (contents) housed in the container main body 2 warm or cold.

Specifically, the container main body 2 is constructed by means of a container having a double structure comprising a bottomed-cylindrical outer container 3 and inner container 4 made of stainless steel or the like, for example, with mouth portions thereof being bonded together in a state in which the inner container 4 is housed inside the outer container 3. Furthermore, a vacuum insulation layer 5 is provided between the outer container 3 and the inner container 4. The vacuum insulation layer 5 may be formed by closing off vent holes provided in the centre of a bottom face of the outer container 3, inside a chamber decompressed (evacuated) to a high vacuum.

The container main body 2 comprises: a substantially circular bottom face portion 2a; a body portion 2b standing upright in a substantially cylindrical shape from an outer circumference of the bottom face portion 2a; and a substantially cylindrical neck portion 2c where the diameter of an upper portion side of the body portion 2b is constricted. Furthermore, an upper end portion of the neck portion 2c opens in a circular shape to form an upper opening portion 2d of the container main body 2. Furthermore, an inner circumferential surface of the neck portion 2c has a narrower diameter than an inner circumferential surface of the body portion 2b. A ring-shaped protuberance 6 is further provided on the inner circumferential surface of the neck portion 2c, protruding over the whole circumference.

It should be noted that the container 100 having a cap of this embodiment has a substantially cylindrical external shape overall, but there is no particular limitation as to the external shape of the container 100 having a cap, and appropriate modifications may be added to suit the size or design, etc. Furthermore, a coating or printing, etc. may also be applied to an outer circumferential surface of the container main body 2.

The cap unit 1 of this embodiment constitutes a stopper for closing the upper opening portion 2d of the container main body 2. Specifically, the cap unit 1 comprises a cap main body 7, and a lid element 9 which is pivotably attached to the cap main body 7 by way of a first hinge portion 8, as shown in fig. 3-7.

It should be noted that in the following description, the side on which the lid element 9 is attached to the cap main body 7 by way of the first hinge portion 8 will be described as the "rear side (back face side)" of the cap unit 1 (container 100 having a cap), and the opposite side thereto will be described as the "front side (front face side)" of the cap unit 1 (container 100 having a cap).

The cap main body 7 is made from a heat-resistant resin such as polypropylene (PP), etc., for example. The cap main body 7 comprises: a circumferential wall portion 7a formed in a substantially cylindrical shape so as to form a continuation with the body portion 2b of the container main body 2; and an upper wall portion 7c which forms an opening portion 7b of narrower diameter than the circumferential wall portion 7a, on an upper portion of the circumferential wall portion 7a.

The cap main body 7 is detachably fitted by screwing onto the neck portion 2c of the container main body 2. A female screw portion 10 is provided for this purpose on the inner circumferential surface of the circumferential wall portion 7a. Meanwhile, a male screw portion 11 which screws together with the female screw portion 10 is provided on the outer circumferential surface of the neck portion 2c.

As shown in fig. 3-9, a mouth-forming member 12 for forming a brim or a spout (a brim in this embodiment) is detachably fitted to the opening portion 7b of the cap main body 7. The mouth-forming member 12 is made of a heat-resistant resin such as polypropylene (PP), etc., for example. A substantially circular liquid passage port 13 communicating with the inside of the container main body 2 is provided in the mouth-forming member 12.

The mouth-forming member 12 comprises: a bottom wall portion 12a in which the liquid passage port 13 is formed; a cylindrical circumferential wall portion 12b extending upwards from around the bottom wall portion 12a; a lower-side flange portion 12c protruding in a ring shape from a lower end side of the outer circumferential surface of the bottom wall portion 12a; a pair of upper-side flange portions 12d each protruding to the opposite side in a left-right direction from an upper end side of the outer circumferential surface of the circumferential wall portion 12b; and a brim portion 12e protruding in an obliquely-cut shape from an upper end on the front side of the circumferential wall portion 12b.

A mouth attachment/detachment mechanism 14 for detachably fitting the mouth-forming member 12 to the opening portion 7b of the cap main body 7 is provided between the cap main body 7 and the mouth-forming member 12. The mouth attachment/detachment mechanism 14 comprises: a first hooking portion 15 on the front side of the mouth-forming member 12, and a latching member 17 provided with a second hooking portion 16 on the rear side of the mouth-forming member 12.

The first hooking portion 15 is provided so as to protrude forwards from the upper end side of the outer circumferential surface of the circumferential wall portion 12b. The second hooking portion 16 is provided so as to protrude towards the rear from the upper end (tip end) side of the latching member 17.

The latching member 17 is attached, so as to be pivotable in the front-rear direction, by way of a hinge portion 18 provided on a lower end portion on the rear side of the mouth-forming member 12. The hinge portion 18 comprises: a first hinge bearing portion 12f provided on the mouth-forming member 12; a second hinge bearing portion 17a and a third hinge bearing portion 17b provided on the latching member 17; and a hinge shaft 19 which is attached in a state in which the first hinge bearing portion 12f is positioned between the second hinge bearing portion 17a and the third hinge bearing portion 17b, and in a state of penetrating shaft holes 12g, 17c, 17d provided in the first, second and third hinge bearing portions 12f, 17a, 17b in a pivot axis direction. Furthermore, an operating portion 17e having a recess or a projection for facilitating a pivoting operation of the latching member 17 using a finger is provided on an upper end portion of the latching member 17.

A biasing member 20 for biasing the latching member 17 toward the rear side in the pivoting direction is disposed between the mouth-forming member 12 and the latching member 17. The biasing member 20 comprises a heat-resistant elastic member such as rubber or an elastomer, for instance silicone rubber or the like. An attachment projection 22 provided on the front side of the latching member 17 is fitted into an attachment hole 21 provided on the rear side of the biasing member 20, whereby the biasing member 20 is attached to the face of the latching member 17 facing the mouth-forming member 12.

The biasing member 20 is compressed (elastically deformed) between the latching member 17 and the mouth-forming member 12 when the tip end side of the latching member 17 is pivoted towards the front, whereby the latching member 17 is biased towards the rear.

The mouth attachment/detachment mechanism 14 comprises: a first latched portion 23 on the front side of the cap main body 7, and a second latched portion 24 on the rear side of the cap main body 7. The first latched portion 23 and the second latched portion 24 comprise step portions, respectively provided at front and rear positions along the opening portion 7b of the upper wall portion 7c.

In the mouth attachment/detachment mechanism 14, the mouth-forming member 12 is fitted from a lower side thereof into the opening portion 7b of the cap main body 7 with the first hooking portion 15 having been positioned in relation to the first latched portion 23. At this time, the pair of upper-side flange portions 12d are abutted with a lower face of the upper wall portion 7c of the cap main body 7. Furthermore, the first hooking portion 15 is latched to the first latched portion 23. Additionally, the tip end side of the latching member 17 pivots towards the front as the second hooking portion 16 passes beyond an edge of the opening portion 7b of the cap main body 7 while the second hooking portion 16 abuts the edge of the opening portion 7b, after which the second hooking portion 16 is latched to the second latched portion 24 at the same time as the tip end side of the latching member 17 is restored to its original position at the rear.

As a result, the mouth-forming member 12 is placed in a state of attachment with the opening portion 7b of the cap main body 7. Furthermore, the brim portion 12e is in a state of outward (upward) protrusion from the opening portion 7b of the cap main body 7 at the same time as the mouth-forming member 12 is attached.

Meanwhile, in the mouth attachment/detachment mechanism 14, the latched state of the second hooking portion 16 in relation to the second latched portion 24 is released by means of an operation to pivot the tip end side of the latching member 17 towards the front. This makes it possible to remove the mouth-forming member 12 from the lower side of the opening portion 7b of the cap main body 7 while the latched state of the first hooking portion 15 in relation to the first latched portion 23 is released. This allows the mouth-forming member 12 and the cap main body 7 to be washed separately, keeping the area between the mouth-forming member 12 and the cap main body 7 hygienic.

The cap main body 7 to which the mouth-forming member 12 is fitted is attached to the neck portion 2c of the container main body 2, thereby closing the upper opening portion 2d of the container main body 2 in a state in which the mouth-forming member 12 is fitted into the upper opening portion 2d.

As shown in fig. 3-6, a water seal gasket 25 is detachably fitted to the lower-side flange portion 12c of the mouth-forming member 12. The water seal gasket 25 is a ring-shaped sealing member for sealing the area between the protuberance 6 (container main body 2) and the mouth-forming member 12 (cap main body 7). The water seal gasket 25 comprises a heat-resistant elastic member such as rubber or an elastomer, for instance silicone rubber or the like. The water seal gasket 25 is fitted onto the outer circumferential portion of the lower-side flange portion 12c.

As the water seal gasket 25 elastically deforms when it is fitted into the upper opening portion 2d of the container main body 2, it is placed in a state of close contact around the whole circumference of the protuberance 6 of the container main body 2. This makes it possible to form a seal between the protuberance 6 and the mouth-forming member 12.

Meanwhile, the water seal gasket 25 can be removed from the lower-side flange portion 12c by elastically deforming (stretching and extending) the water seal gasket 25 itself. This allows the water seal gasket 25 and the mouth-forming member 12 to be washed separately, keeping the area between the water seal gasket 25 and the mouth-forming member 12 hygienic.

The lid element 9 serves to open/close the liquid passage port 13 of the mouth-forming member 12, and comprises a heat-resistant resin such as polypropylene (PP), for example. The lid element 9 comprises: a circumferential wall portion 9a which is formed in a substantially cylindrical shape so as to form a continuation with the circumferential wall portion 7a of the cap main body 7; a top wall portion 9b for covering a top face of the circumferential wall portion 9a; and a substantially cylindrical inner wall portion 9c descending from a lower face of the top wall portion 9b while penetrating the top wall portion 9b.

The lid element 9 is biased in a direction for opening the liquid passage port 13 of the mouth-forming member 12 (referred to below as the opening direction), by means of a first biasing member 26 provided on the inside of the first hinge portion 8, which will be described later.

A lid sealing gasket 27 for closing the liquid passage port 13 of the mouth-forming member 12 is provided on the inside of the lid element 9. The lid sealing gasket 27 is a stopper-like sealing member for sealing the liquid passage port 13. The lid sealing gasket 27 comprises an elastic member, and it is possible to use the same material as that of the water seal gasket 25.

The lid sealing gasket 27 is a bottomed cylindrical sealing member detachably fitted to the inner wall portion 9c of the lid element 9. Specifically, the lid sealing gasket 27 is detachably fitted to the lower end side of the inner wall portion 9c of the lid element 9 in a state in which the inner wall portion 9c is fitted into a centre hole 27a on the inside of the lid sealing gasket 27. Furthermore, a tip end of the lid sealing gasket 27 is formed in a dome shape.

The lid sealing gasket 27 is detachably fitted to the lid element 9 by fitting the inner wall portion 9c into the centre hole 27a. As a result, when the lid element 9 has closed the upper portion of the cap main body 7 of the cap unit 1, a state of sealing around the liquid passage port 13 is achieved while the lid sealing gasket 27 elastically deforms. This enables the liquid passage port 13 of the mouth-forming member 12 to be closed.

Meanwhile, removing the lid sealing gasket 27 from the inner wall portion 9c (lid element 9) allows the lid sealing gasket 27 and the lid element 9 to be washed separately, keeping the area between the lid sealing gasket 27 and the lid element 9 hygienic.

A cap member 28 for covering the upper end side of the inner wall portion 9c is attached to the upper face side of the top wall portion 9b. The same material as that of the lid element 9 is used for the cap member 28, which is formed to be substantially disc-shaped. Meanwhile, a recess 29 having a shape corresponding to the cap member 28 is provided in the upper face of the top wall portion 9b. The cap member 28 is fitted into this recess 29.

The cap unit 1 comprises a lid locking mechanism 36 for fixing the lid element 9 in a position in which the lid element 9 closes the liquid passage port 13 (referred to below as the closed position) while resisting the biasing of the first biasing member 26.

Specifically, as shown in fig. 4-6 and 10-15, the lid locking mechanism 36 comprises: a locking member 38 pivotably attached to the cap main body 7 by way of a second hinge portion 37, and a ring stopper 39 pivotably attached to the cap main body 7 by way of the second hinge portion 37.

The second hinge portion 37 comprises: a first hinge bearing portion 40 provided on the locking member 38; a second hinge bearing portion 41 and a third hinge bearing portion 42 provided on the cap main body 7; and a hinge shaft 43 which is attached in a state in which the first hinge bearing portion 40 is positioned between the second hinge bearing portion 41 and the third hinge bearing portion 42, and in a state of penetrating shaft holes 40a, 41a, 42a provided in the first, second and third hinge bearing portions 40, 41, 42 in the pivot axis direction.

The locking member 38 is pivotably supported by means of the second hinge portion 37 provided on a side face (circumferential wall portion 7a) on the front side of the cap main body 7. The locking member 38 comprises: a first arm portion 38a extending upwards from the second hinge portion 37, and a second arm portion 38b extending downwards from the second hinge portion 37.

A hook portion 44 constituting one latching portion is provided protruding towards the rear at a tip end of the first arm portion 38a (upper end of the locking member 38). Meanwhile, a hook receiver 45 constituting another latching portion latched by the hook portion 44 of the locking member 38 is provided protruding towards the front on a side face on the front side of the lid element 9 (circumferential wall portion 9a).

The locking member 38 is pivoted between a position in which the hook portion 44 is latched to the hook receiver 45 (referred to below as the "locking position"), and a position in which the latched state of the hook portion 44 with the hook receiver 45 is released (referred to below as the "locking release position").

A second biasing member 46 is disposed between the second arm portion 38b and the circumferential wall portion 7a. The second biasing member 46 comprises a heat-resistant elastic member such as rubber or an elastomer, for instance silicone rubber or the like, which can be easily coloured, unlike a metal.

The second biasing portion 46 is pivotably attached by way of the second hinge portion 37, and biases the locking member 38 towards the locking position side in the pivoting direction. Specifically, the second biasing member 46 comprises: an elastic deformation portion 46a positioned between the second arm portion 38b and the circumferential wall portion 7a; and a support piece portion 46c which extends upwards from the elastic deformation portion 46a and is provided with a shaft hole 46b.

The elastic deformation portion 46a is provided extending in a substantially cylindrical shape in the front-rear direction. Furthermore, a substantially columnar mating projection 46d is provided protruding towards the front at a front end of the elastic deformation portion 46a. Meanwhile, a mating hole portion 47 with which the mating projection 46d is mated is provided in the second arm portion 38b of the locking member 38. It should be noted that the mating hole portion 47 does not necessarily have to be configured penetrating the second arm portion 38b, and it may equally be a mating recess with which the mating projection 46d is mated.

The support piece portion 46c is provided extending in a substantially planar shape in a vertical direction. Meanwhile, a slit portion 48 into which the support piece portion 46c is inserted is provided in the first hinge bearing portion 40.

Accordingly, the second biasing member 46 is attached to the locking member 38 as a single piece in a state in which the mating projection 46d is mated with the mating hole portion 47 while the support piece portion 46c is also inserted into the slit portion 48. Furthermore, the second biasing member 46 is pivotably attached, together with the locking member 38, by way of the second hinge portion 37, in a state in which the hinge shaft 43 penetrates the shaft hole 46b in the pivot axis direction.

By this means, when the second arm portion 38b side of the locking member 38 is subjected to a pressing operation, the elastic deformation portion 46a is compressed between the second arm portion 38b and the circumferential wall portion 7a, whereby the second biasing member 46 biases the locking member 38 towards the locking position side in the pivoting direction.

The lid locking mechanism 36 comprises a metal cover member 49 made of stainless steel or the like, for example, which covers the locking member 38. The cover member 49 comprises: a cover main body 49a for covering the locking member 38; and a pair of support arms 49c which protrude from the cover main body 49a so as to be positioned on both sides of the first hinge bearing portion 40 lying therebetween, and which are provided with shaft holes 49b penetrated by the hinge shaft 43. Furthermore, the thickness of the cover member 49 is preferably around 0.2-1.0 mm.

Furthermore, the cover member 49 comprises, as a fixing mechanism for fixing the cover member 49 to the first hinge bearing portion 40 by means of the pair of support arms 49c: latching projections 49d protruding in a vertical direction from tip ends of the pair of support arms 49c; and latching recesses 40b which are latched by the latching projections 49d on both sides with the first hinge bearing portion 40 therebetween.

Accordingly, the cover member 49 is attached to the locking member 38 as a single piece in a state in which the cover main body 49a covers the front side of the locking member 38 while the latching projections 49d of the pair of support arms 49c are also latched to the latching recesses 40b of the first hinge bearing portion 40. Furthermore, the cover member 49 is pivotably attached, together with the locking member 38, by way of the second hinge portion 37, in a state in which the hinge shaft 43 penetrates the shaft holes 49b in the pivot axis direction.

By this means, the cover member 49 is pivoted, while covering the locking member 38, between the locking position and the locking release position together with the locking member 38.

The ring stopper 39 comprises a ring-shaped member which is partially open, and has shaft holes 39a penetrated by the hinge shaft 43 at both ends thereof, the ring stopper 39 being pivotably supported outside the second hinge portion 37 (second and third hinge bearing portions 41, 42). As a result, the ring stopper 39 is pivotable in the vertical direction.

Meanwhile, a stopper receiver 50 which retains the ring stopper 39 is provided on the side face (circumferential wall portion 9a) on the front side of the lid element 9. The stopper receiver 50 has a shape corresponding to the inside of the ring stopper 39 and is provided protruding forwards from a position surrounding the periphery of the hook receiver 45.

In the lid locking mechanism 36, the hook portion 44 of the locking member 38 is latched to the hook receiver 45 when the lid element 9 has closed the upper portion of the cap main body 7, thereby maintaining a state in which the lid element 9 closes the upper portion of the cap main body 7 (referred to below as the "locked state"). When the second arm portion 38b side of the locking member 38 is subjected to a pressing operation from the locked state, the latched state of the hook portion 44 in relation to the hook receiver 45 is released. This enables the lid element 9 to pivot in the opening direction by means of the biasing of the first biasing member 26.

Meanwhile, the lid locking mechanism 36 of the ring stopper 39 is retained by the stopper receiver 50 when the lid element 9 has closed the upper portion of the cap main body 7, thereby preventing pivoting of the lid element 9 in the opening direction. As a result, the lid locking mechanism 36 is capable of preventing opening of the lid element 9 by an unneeded operation of the locking member 38.

It should be noted that the mechanism for fixing the cover member 49 is not necessarily limited to a configuration in which the latching projections 49d are latched to the latching recesses 40b. As shown in fig. 16, for example, the mechanism for fixing the cover member 49 may also have a configuration comprising a pair of bent pieces 49e formed by bending tip ends of the pair of support arms 49c in a direction of facing each other, so that the first hinge bearing portion 40 is held between this pair of bent pieces 49e.

Furthermore, as shown in fig. 17, the mechanism for fixing the cover member 49 may also have a configuration comprising latching pieces 49f formed by cutting and lifting a portion of the pair of support arms 49c, the pair of latching pieces 49f being latched to latching receivers 40c provided on the first hinge bearing portion 40.

Furthermore, as shown in fig. 18, the cover member 49 may also be configured so that the shaft holes 49b provided in the pair of support arms 49c are long holes, and protrusions 40d provided on the first hinge bearing portion 40 are engaged in these shaft holes 49b, thereby preventing misalignment of the cover member 49 in relation to the first hinge bearing portion 40 (locking member 38).

It should be noted that this embodiment has a configuration in which the cover member 49 is pivotably attached, together with the locking member 38, by way of the second hinge portion 37, in a state in which the hinge shaft 43 penetrates the shaft holes 49b in the pivot axis direction, but the embodiment is not necessarily limited to a configuration where the hinge shaft 43 is caused to penetrate, provided that the second hinge portion 37 functions as a hinge.

Furthermore, the cover member 49 may be attached as a single piece to the locking member 38 by means of the abovementioned fixing mechanism, for example, provided that the cover member 49 is attached as a single piece to the locking member 38 so as to be pivotable in relation to the second hinge portion 37.

Furthermore, this embodiment has a configuration in which the second hinge portion 37 comprises the first hinge bearing portion 40 provided on the locking member 38, and the second hinge bearing portion 41 and third hinge bearing portion 42 provided on the cap main body 7, but it is also possible to employ a configuration in which the locking member 38 side and the cap main body 7 side are switched.

That is to say, it is possible to employ a configuration in which the first hinge bearing portion is provided on the cap main body 7 side, and the second hinge bearing portion and third hinge bearing portion are provided on the locking member 38 side. In the case of this configuration, the pair of support arms 49c of the cover member 49 protrude from the cover main body 49a so as to be positioned on both sides of the second hinge bearing portion and the third hinge bearing portion provided on the locking member 38, and the cover member 49 is fixed to the second hinge bearing portion and the third hinge bearing portion by means of the hinge shaft 43 or the fixing mechanism.

As shown in fig. 19-28, a pivoting damper mechanism 51 for damping a pivoting speed of the lid element 9 which is pivoted by biasing of the first biasing member 26 is provided on the first hinge portion 8.

Specifically, the first biasing member 26 is a torsion spring and comprises: a winding portion 26a wound in a coil shape; one arm portion 26b extending from one end side of the winding portion 26a; and another arm portion 26c extending from another end side of the winding portion 26a.

The first hinge portion 8 comprises: a first hinge bearing portion 52 provided on either one of the cap main body 7 and the lid element 9 (the cap main body 7 in this embodiment); a second hinge bearing portion 53 and a third hinge bearing portion 54 provided on the other of the cap main body 7 and the lid element 9 (the lid element 9 in this embodiment); and a hinge shaft 55 which is attached in a state in which the first hinge bearing portion 52 is positioned between the second hinge bearing portion 53 and the third hinge bearing portion 54, and in a state of penetrating shaft holes 52a, 53a, 54a provided in the first, second and third hinge bearing portions 52, 53, 54 in the pivot axis direction.

The first hinge bearing portion 52 has a shaft hole 52a penetrating in the pivot axis direction and is formed with a substantially cylindrical shape, and is provided protruding from a central portion on the rear side of the cap main body 7.

The second hinge bearing portion 53 has a shaft hole 53a penetrating in the pivot axis direction and is provided protruding on one side of a central portion on the rear side of the lid element 9 so as to have a shape which forms a continuation with the first hinge bearing portion 52.

The third hinge bearing portion 54 has a shaft hole 54a penetrating in the pivot axis direction and is provided protruding on another side of the central portion on the rear side of the lid element 9 so as to have a shape which forms a continuation with the first hinge bearing portion 52.

The first hinge bearing portion 52 is provided with a housing recess 52b where a surface facing the third hinge bearing portion 54 is indented in a substantially cylindrical shape in the pivot axis direction. The first hinge bearing portion 52 is furthermore provided with one arm receiver 52c where a surface facing the third hinge bearing portion 54 is indented correspondingly with the shape of said one arm portion 26b of the first biasing member 26.

The first biasing member 26 is arranged inside the first hinge bearing portion 52 in a state in which the winding portion 26a is housed inside the housing recess 52b, and said one arm portion 26b is engaged with said one arm receiver 52c.

Meanwhile, the third hinge bearing portion 54 is provided with an opposing member 56 constituting a surface facing the first hinge bearing portion 52. The opposing member 56 has a shaft hole 56a penetrated by the hinge shaft 55, and is attached in a state of being fitted into a mating recess 54b provided in the third hinge bearing portion 54.

Furthermore, a surface of the opposing member 56 facing the first hinge bearing portion 52 is provided with: a mating projection 56b which protrudes correspondingly with the shape of the housing recess 52b; and another arm receiver 56c which is indented correspondingly with the shape of said other arm portion 26c of the first biasing member 26.

The opposing member 56 is arranged so as to be pivotable together with the third hinge bearing portion 54 in a state in which the mating projection 56b is mated with the housing recess 52b, while said other arm portion 26c of the first biasing member 26 is engaged with said other arm receiver 56c.

As a result, when the lid element 9 is caused pivot from the position in which the lid element 9 opens the liquid passage port 13 (referred to below as the open position) towards the opposite side to the opening direction (referred to below as the closing direction), the first biasing member 26 elastically deforms in a direction such that an opening angle between said one arm portion 26b and said other arm portion 26c is narrowed, whereby the lid element 9 is biased towards the opening direction in relation to the cap main body 7 by means of this resilient force.

It should be noted that the opposing member 56 may be formed from a different material from that of the first hinge bearing portion 52 (cap main body 7), and a material having excellent wear resistance such as polyacetal (POM) or acrylonitrile-butadiene-styrene (ABS), for example, may preferably be used.

In the first hinge portion 8, the opposing member 56 having excellent wear resistance is provided as a separate element from the third hinge bearing portion 54, which thereby makes it possible to improve durability. It should be noted that the opposing member 56 is not necessarily limited to a configuration in which it is provided as a separate element from the third hinge bearing portion 54, and it may equally be formed as a single element with the third hinge bearing portion 54.

The pivoting damper mechanism 51 is provided between the first hinge bearing portion 52 and the second hinge bearing portion 53. Specifically, the pivoting damper mechanism 51 comprises: a first gear 57 attached to the first hinge bearing portion 52; a second gear 58 which meshes with the first gear 57; a rotary damper 59 which rotatably supports the second gear 58 and imparts resistance to rotation of the second gear 58; and a damper case 60 which is pivoted as one with the lid element 9 while holding the rotary damper 59.

The damper case 60 internally houses the first gear 57, second gear 58 and rotary damper 59 so that those members cannot be seen from the outside. Furthermore, in the cap unit 1 of this embodiment, the first biasing member 26 and the pivoting damper mechanism 51 are efficiently arranged inside a space defined on the inner side of the first hinge portion 8 and the lid element 9.

It should be noted that a material having excellent wear resistance such as polyacetal (POM) or acrylonitrile-butadiene-styrene (ABS), for example, may preferably be used for the first and second gears 57, 58.

A material having excellent dimensional workability such as polycarbonate (PC) or acrylonitrile-butadiene-styrene (ABS), for example, may preferably be used for the damper case 60.

The first gear 57 comprises: a shaft hole 57a penetrated by the hinge shaft 55, and a fixed shaft 57b protruding from a surface facing the first hinge bearing portion 52. The first gear 57 is attached to the first hinge bearing portion 52 as a single piece, in a state in which the fixed shaft 57b is fitted into a fixing hole 52d provided in a surface of the first hinge bearing portion 52 facing the second hinge bearing portion 53.

The second gear 58 is positioned in front of the first gear 57 and is rotatably supported by means of the rotary damper 59 so as to mesh with the first gear 57. The rotary damper 59 imparts resistance to rotation of the second gear 58 and reduces the rotation speed thereof by utilizing viscosity resistance of an oil which fills the rotary damper 59.

The damper case 60 comprises: a shaft hole 60a penetrated by the hinge shaft 55, and a latching hook 60b which is latched in a latching hole 9d provided on the inner side of the lid element 9 illustrated in fig. 7, the damper case 60 being arranged so as to be pivotable together with the second hinge bearing portion 53.

The damper case 60 is provided with: a first recess 60c in which a surface facing the second hinge bearing portion 53 is indented correspondingly with the second gear 58 and the rotary damper 59; and a second recess 60d in which a surface facing the first hinge bearing portion 52 is indented correspondingly with the first gear 57. The first recess 60c and the second recess 60d are in communication at overlapping positions.

The first gear 57 and the second gear 58 mesh with each other through the first recess 60c and the second recess 60d. The rotary damper 59 comprises a fixing hole 59a and a fixing groove 59b which are penetrated by a pair of fixing pins 60e provided on the inner side of the first recess 60c, the rotary damper 59 being attached to the inner side of the first recess 60c.

By this means, the pivoting damper mechanism 51 can restrict the pivoting speed of the lid element 9 which is pivoted from the closed position towards the open position by means of the biasing of the first biasing member 26 when the locked state of the lid element 9 afforded by the lid locking mechanism 36 described above is released.

Specifically, the damper case 60 in the pivoting damper mechanism 51 is pivoted together with the lid element 9 when the lid element 9 is pivoted from the closed position towards the open position by means of the biasing of the first biasing member 26.

At this time, the rotary damper 59 imparts resistance to the rotation of the second gear 58 which is meshed with the first gear 57, as the second gear 58 rotates, thereby reducing the rotation speed of the second gear 58. As a result, the pivoting speed of the lid element 9 which is pivoted towards the open position can be kept low by means of the resistance of the rotary damper 59.

Accordingly, even if the pressure inside the container main body 2 increases, for example when the container main body 2 contains boiling water, etc., the cap unit 1 of this embodiment makes it possible to prevent the lid element 9 from being forcefully pivoted towards the open position by means of a force which is exerted when the locked state of the lid element 9 is released and the pressure inside the container main body 2 is released.

It should be noted that the first hinge portion 8 has a configuration in which the first hinge bearing portion 52 is provided on the cap main body 7 side, and the second hinge bearing portion 53 and the third hinge bearing portion 54 are provided on the lid element 9 side, but the first hinge portion 8 is not limited to this configuration, and the first hinge bearing portion 52 may equally be provided on the lid element 9 side, and the second hinge bearing portion 53 and the third hinge bearing portion 54 may equally be provided on the cap main body 7 side. Furthermore, the configuration on the second hinge bearing portion 53 side and the configuration on the third hinge bearing portion 54 side of the first hinge portion 8 may also be switched.

Furthermore, as shown in fig. 29, the damper case 60 may be provided as a single piece with the cap main body 7 while the rotary damper 59 is held thereby. This configuration should be constructed so that the first gear 57 is attached to the second hinge bearing portion 53, and the damper case 60 holding the rotary damper 59 and the second gear 58 which meshes with the first gear 57 is provided as a single piece with the first hinge bearing portion 52.

As described above, in the lid locking mechanism 36 of the cap unit 1 of this embodiment, the second biasing member 46 is pivotably attached by way of the second hinge portion 37. As a result, the second biasing member 46 of the lid locking mechanism 36 can be stably arranged, without detachment, between the second arm portion 38b of the locking member 38 and the circumferential wall portion 7a of the cap main body 7. Furthermore, assembly is also simplified because there is no detachment during assembly either. Additionally, there is no detachment after assembly even if an external force is applied.

Furthermore, in the lid locking mechanism 36, the second biasing member 46 is pivotably attached to the second hinge portion 37 together with the locking member 38, in a state in which the second biasing member 46 is attached to the locking member 38 as a single element. As a result, the second biasing member 46 of the lid locking mechanism 36 can be easily arranged in a stable state between the second arm portion 38b of the locking member 38 and the circumferential wall portion 7a of the cap main body 7.

Furthermore, in the lid locking mechanism 36, the second biasing member 46 is arranged so as to fill a gap which is formed between the second arm portion 38b of the locking member 38 and the circumferential wall portion 7a of the cap main body 7. This is hygienic because it prevents washing water and dust, etc. from penetrating into the gap and remaining therein.

Additionally, the second biasing member 46 comprises the abovementioned elastic member, which can be easily shaped in a coloured state, is easier to colour than a metal spring member, and can be selected from a wide range of colours. Accordingly, when the second biasing member 46 is coloured the same as the cap main body 7 or the locking member 38, the second biasing member 46 can be made less conspicuous from the outside. Meanwhile, if the second biasing member 46 is coloured differently, this can accentuate the visual design.

Furthermore, in the lid locking mechanism 36, the metal cover member 49 which covers the locking member 38 is pivotably attached by way of the second hinge portion 37. As a result, the locking member 38 of the lid locking mechanism 36 is protected by means of the cover member 49, and it is possible to increase the strength of support of the locking member 38 when it is pivotably supported by means of the second hinge portion 37.

Accordingly, the locking member 38 of the lid locking mechanism 36 is covered by the metal cover member 49, which makes it possible to reduce the size and thickness of the locking member 38 to a size which hitherto would have cracked due to insufficient strength. Furthermore, the exterior of the locking member 38 which is normally a resin is provided with a metallic texture, and flow marks, etc. caused by moulding can also be covered. As a result, not only is it possible to improve the visual appearance of the locking member 38, it is also possible to achieve a balance between durability and design properties of the locking member 38.

It should be noted that if the locking member 38 were made of a metal, instead of the metal cover member 49 being provided, the hook portion 44 comprising a metal would be in sliding contact with the hook receiver 45 comprising a resin. In that case, the low-strength hook receiver 45 might be abraded by repeated use, depending on the choice of material for the lid element 9. Furthermore, forming the locking member 38 from a metal not only increases the cost of materials and processing due to its complex shape, it also increases the weight of the locking member 38. In contrast to this, the cover member 49 is thin and can therefore be inexpensively produced by sheet metal pressing or the like, without using casting or machining.

In the cap unit 1 of this embodiment, it is thus possible to obtain the lid locking mechanism 36 which has high functionality and excellent design properties.

Furthermore, the cap unit 1 of this embodiment is provided with the pivoting damper mechanism 51 which damps the pivoting speed of the lid element 9 which is pivoted by means of the biasing of the first biasing member 26, thereby making it possible to prevent the lid element 9 from being forcefully pivoted in the opening direction when the locked state of the lid element 9 afforded by the lid locking mechanism 36 is released.

As a result, the cap unit 1 of this embodiment makes it possible to prevent external scattering of a beverage or condensed water drops adhering to the inner side of the lid element 9 (especially the lid sealing gasket 27) when the lid element 9 is pivoted in the opening direction. Furthermore, it is also possible to prevent the lid element 9 from being pivoted in the closing direction by recoil from rebounding after the lid element 9 has been forcefully pivoted towards the opening direction. The lid element 9 is also easy to use because it is pivoted towards the opening direction at a largely constant speed.

Furthermore, wear produced between the first hinge bearing portion 52 and the second hinge bearing portion 53 and third hinge bearing portion 54 is kept low in the cap unit 1 of this embodiment, making it possible to improve durability of the first hinge portion 8.

Furthermore, the first gear 57, second gear 58, and rotary damper 59 are all arranged on the inner side of the damper case 60 in the cap unit 1 of this embodiment, so they cannot be seen from the outside, making it possible to impart a favourable aesthetic. Furthermore, it is also possible to prevent deterioration of the damper function caused by penetration of small pieces of dirt, etc. into the meshing portion between the first gear 57 and the second gear 58.

Accordingly, the container 100 having a cap of this embodiment can be made even easier to use, by virtue of being provided with such a cap unit 1.

It should be noted that the present invention is not necessarily limited to the embodiment described above, and various modifications may be added within a scope that does not depart from the essential point of the present invention.

For example, the abovementioned embodiment describes an exemplary case in which the present invention was applied to a beverage container which, by virtue of the container main body 2 having a vacuum-insulated structure, has a heat-retention or cold-retention function, but the present invention may be broadly applied to containers having a cap, which comprise a container main body and a cap unit detachably fitted to the container main body.

### [Key to Symbols]

- 1: Cap unit
- 2: Container main body
- 7: Cap main body
- 8: First hinge portion
- 9: Lid element
- 12: Mouth-forming member
- 13: Liquid passage port
- 14: Mouth attachment/detachment mechanism
- 25: Water seal gasket
- 26: First biasing member
- 27: Lid sealing gasket
- 28: Cap member
- 36: Lid locking mechanism
- 37: Second hinge portion
- 38: Locking member
- 39: Ring stopper
- 40: First hinge bearing portion
- 41: Second hinge bearing portion
- 42: Third hinge bearing portion
- 43: Hinge shaft
- 46: Second biasing member
- 49: Cover member
- 51: Pivoting damper mechanism
- 52: First hinge bearing portion
- 53: Second hinge bearing portion
- 54: Third hinge bearing portion
- 55: Hinge shaft
- 56: Opposing member
- 57: First gear
- 58: Second gear
- 59: Rotary damper
- 60: Damper case

## Claims

1. Cap unit which is detachably fitted to a container main body having an open upper portion, the cap unit comprising:
a cap main body which closes an upper opening portion of the container main body while also being provided with a liquid passage port communicating with the inside of the container main body;
a lid element for opening/closing the liquid passage port, which is pivotably attached to the cap main body by way of a first hinge portion, in a state of being biased in a direction for opening the liquid passage port by means of a first biasing member provided on the first hinge portion; and a lid locking mechanism for fixing the lid element in a position for closing the liquid passage port while resisting the biasing of the first biasing member,
**characterized in that** the lid locking mechanism comprises:
a locking member which is pivotably attached to the cap main body by way of a second hinge portion, and is pivoted between a locking position, in which one latching portion provided on one end side thereof is latched to another latching portion provided on the lid element side, and a locking release position, in which the latched state of said one latching portion and said other latching portion is released; and
a cover member for covering the locking member.

2. Cap unit according to claim 1, **characterized in that** the cover member is pivotably attached by way of the second hinge portion.

3. Cap unit according to claim 1, **characterized in that** the cover member is attached to the locking member by way of a fixing mechanism.

4. Cap unit according to claim 2 or 3, **characterized in that** the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction.

5. Cap unit according to claim 4, **characterized in that** the cover member comprises: a cover main body for covering the locking member; and a pair of support arms which protrude from the cover main body so as to be positioned on both sides of the first hinge bearing portion lying therebetween, and which are provided with the shaft holes, the cover member being attached to the locking member as a single piece.

6. Cap unit according to claim 4, **characterized in that** the cover member comprises: a cover main body for covering the locking member; and a pair of support arms which protrude from the cover main body so as to be positioned on both sides of the second hinge bearing portion and the third hinge bearing portion lying therebetween, and which are provided with the shaft holes, the cover member being attached to the locking member as a single piece.

7. Cap unit according to claim 5 or 6, **characterized in that** the cover member comprises shaft holes allowing the hinge shaft to penetrate the pair of support arms in the pivot axis direction, the cover member being attached to the locking member as a single piece.

8. Cap unit according to claim 3, **characterized in that** the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction,
the cover member comprises: a cover main body for covering the locking member; and a pair of support arms which protrude from the cover main body so as to be positioned on both sides of the first hinge bearing portion lying therebetween, and
the fixing mechanism fixes the pair of support arms to the first hinge bearing portion.

9. Cap unit according to claim 3, **characterized in that** the second hinge portion comprises: a first hinge bearing portion provided on either one of the locking member and the cap main body; a second hinge bearing portion and a third hinge bearing portion provided on the other of either the locking member or the cap main body; and a hinge shaft which is attached in a state in which the first hinge bearing portion is positioned between the second hinge bearing portion and the third hinge bearing portion, and in a state of penetrating shaft holes provided in the first, second and third hinge bearing portions in a pivot axis direction,
the cover member comprises: a cover main body for covering the locking member; and a pair of support arms which protrude from the cover main body so as to be positioned on both sides of the second hinge bearing portion and the third hinge bearing portion lying therebetween, and
the fixing mechanism fixes the pair of support arms to the second hinge bearing portion and the third hinge bearing portion.

10. Cap unit according to any one of claims 1 to 9, **characterized in that** the cover member is made of a metal.

11. Container having a cap, which comprises:
a cap unit according to any one of claims 1 to 10; and
a container main body to which the cap unit is fitted.

12. Container having a cap according to claim 11, **characterized in that** the container main body has a vacuum-insulated structure.
